# EUROPEAN PATENT SPECIFICATION

(11) **EP 3 140 796 B1**
(45) Date of publication and mention of the grant of the patent: **05.05.2021**
(21) Application number: 15789231.6
(22) Date of filing: 07.05.2015
(51) Int. Cl.: G06Q 20/34, G06Q 20/38, G06Q 20/20, G06Q 20/40, G07F 7/08

(54) **ESTABLISHMENT OF A SECURE SESSION BETWEEN A CARD READER AND A MOBILE DEVICE**
HERSTELLUNG EINER SICHEREN SITZUNG ZWISCHEN EINEM KARTENLESER UND EINER MOBILEN VORRICHTUNG
ÉTABLISSEMENT D'UNE SESSION SÉCURISÉE ENTRE UN LECTEUR DE CARTE ET UN DISPOSITIF MOBILE

(30) Priority: 08.05.2014 US 201414273447; 08.05.2014 US 201414273449; 04.02.2015 US 201514614350
(43) Date of publication of application: 15.03.2017
(60) Divisional application: 21165066.8
(73) Proprietor: Square, Inc., San Francisco, California 94103 (US)
(72) Inventor: GUISE, Max Joseph, San Francisco, California 94103 (US); WADDLE, Jason, San Francisco, California 94103 (US); DAI ZOVI, Dino, San Francisco, California 94103 (US)
(74) Representative: Shipp, Nicholas
(86) International application number: PCT/US2015/029763
(87) International publication number: WO 2015/171939

(56) References cited:
- US-A1- 2004 094 624
- US-A1- 2004 104 268
- US-A1- 2013 119 130
- US-A1- 2013 173 475
- US-A1- 2013 182 845
- US-A1- 2013 328 801
- US-A1- 2014 075 522
- MENEZES A J ET AL: "HANDBOOK OF APPLIED CRYPTOGRAPHY, MOTIVATION FOR USE OF SESSION KEYS, KEY TRANSPORT BASED ON PUBLIC-KEY ENCRYPTION, HYBRID KEY TRANSPORT PROTOCOLS USING PK ENCRYPTION", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 494,506 - 507,512, XP002510620, ISBN: 978-0-8493-8523-0 * the whole document *
- RONALD TOEGL ET AL: "An approach to introducing locality in remote attestation using near field communications", THE JOURNAL OF SUPERCOMPUTING, KLUWER ACADEMIC PUBLISHERS, BO, vol. 55, no. 2, 19 March 2010 (2010-03-19) , pages 207-227, XP019872738, ISSN: 1573-0484, DOI: 10.1007/S11227-010-0407-1

## Description

### CROSS REFERENCE TO RELATED APPLICATION(S)

This application claims priority to U.S. Patent Application No. 14/273,447 filed May 8, 2014.

This application claims priority to U.S. Patent Application No. 14/273,449 filed May 8, 2014.

This application claims priority to U.S. Patent Application No. 14/614,350 filed February 4, 2015.

### FIELD OF THE INVENTION

The invention to which this European patent relates pertains to establishment of a secure session in a payment processing system, and more particularly, to the establishment of a secure session between a card reader and a mobile device in a mobile payment processing system.

### BACKGROUND

Technology has developed to the point where a merchant can now initiate a credit card transaction with a customer by using a mobile device, such as a smartphone or a tablet computer (e.g., an Apple iPad or the like). For example, current technology includes a small card reader that plugs into the audio jack of a smartphone or tablet of a merchant, and point-of-sale (POS) software that executes in the mobile device, to facilitate a credit card payment transaction. The merchant swipes the customer's credit card through the card reader, and the card reader communicates the card's data to the POS software in the mobile device. The POS software then confirms the authenticity of the card and communicates with a remote financial transaction processing system to obtain authorization for the transaction.

While this type of payment model offers much greater convenience and ease of use than the traditional POS systems, there are certain security related issues that need to be addressed. For example, data read from the card needs to be protected from discovery by unauthorized parties or entities, such as malware that may exist in the mobile device. Additionally, the customer may be required to input a personal identification number (PIN) into the mobile device as a security measure, before data from his or her credit card can be read by the card reader or decrypted by the POS software. PINs are required, for example, in debit card-based transactions and in some credit card-based transactions, such as those associated with the Europay, MasterCard and Visa (EMV) standard. In those scenarios, the PIN also needs to be protected from discovery by unauthorized parties or entities.

US 2014/0075522 A1 describes a method in which a virtual trusted platform module (VTPM) requests a security state from a virtual machine manager. The security state is indicative of the integrity of at least a portion of software and hardware configurations of the virtual machine manager.

US 2013/0328801 A1 describes a card reader configured to read a smart card which can be detachably connected to a mobile computing device.

### SUMMARY

The invention to which this European patent relates is set out in the appended set of claims.

### BRIEF DESCRIPTION OF THE DRAWINGS

One or more embodiments of the present invention to which this European patent relates and examples useful for understanding the invention are illustrated by way of example and not limitation in the figures of the accompanying drawings, in which like references indicate similar elements.
Figure 1 illustrates an example of a configuration in which a card reader is coupled to a mobile device.
Figure 2 shows a network environment in which a card reader coupled to a mobile device can operate to perform validation and a payment transaction.
Figure 3 illustrates an example of a process of establishing a secure session between a card reader and a point-of-sale (POS) application in a mobile device.
Figure 4 shows a process by which data can be communicated between a POS application and a card reader to request authorization for a payment transaction.
Figure 5 schematically shows an example of a process of validating a card reader and a POS application for secure session establishment.
Figure 6 is a flow diagram illustrating an example of a process of validating a card reader and a POS application for secure session establishment.
Figure 7 is a high-level block diagram of a hardware architecture of a processing system that can be used to implement a validation system or a mobile device.
Figure 8 is a high-level block diagram of a hardware architecture of a card reader.

### DETAILED DESCRIPTION

In a payment transaction involving a card reader connected to a mobile device, confidential or sensitive data may be communicated between the card reader and the mobile device. For example, a customer may input his PIN into the mobile device, and that PIN may be communicated from the mobile device to the card reader to enable the card reader to access other confidential or sensitive data stored on the card, such as the credit card number, expiration date and card verification value (CVV). It is desirable, therefore, to protect the customer's PIN and card data from disclosure to unauthorized parties or entities. Such protection can be provided by, among other things, establishing a secure (e.g., encrypted) communication session between the card reader and the mobile device. However, a secure communication session should only be established if it first has been verified that both the card reader and the mobile device are trustworthy, i.e., that they have not been affected by malware or other malicious activity.

Accordingly, introduced here is a technique for establishing a secure communication session between a mobile device and a card reader. The technique involves using a trusted, remote validation system to validate security information of both the card reader and a POS module in the mobile device prior to, and as a precondition of, the card reader and the POS module establishing a secure communication session with each other. The POS module is software, such as a POS application, as henceforth assumed in this description to facilitate explanation. Note, however, that the POS module could alternatively, in examples useful for understanding the invention, be dedicated hardware, such as an integrated circuit (IC) chip or chipset in the mobile device, or it could be a combination of software and dedicated hardware.

In the technique introduced here, the POS module sends the security information of both the card reader and the POS module to a remote validation server. The security information includes cryptographic keys of the POS module and the card reader and additional security information related to the POS module and its software environment. Note that the term "send" or sends" as used herein means that the information is communicated either directly or directly between the sending entity and the receiving entity. In other words, the sending entity sends or transmits the information for delivery to (i.e., destined for) the receiving entity, although one or more intermediary entities may be present in the communication path between the sending entity and the receiving entity.

The card reader and the POS application each generate a separate public cryptographic key (hereinafter simply "public key"), both of which the POS application sends to the remote validation server. The POS application also gathers and/or generates additional security information, which can included a "fingerprint" of a software environment in the mobile device, which the POS application also sends to the validation server. The validation server then validates all of that security information. Note that "validation" of an entity, as the term is used herein, includes authentication of the entity (i.e., determining that the entity is who/what it claims to be) or determining that the entity has not been subject to a security breach, or both. The validation server analyzes the additional security information of the POS application for evidence of possible "jailbreaking" of the mobile device (i.e., unauthorized enablement of features or functions or disablement of security features), operation of a debugger on the mobile device, the presence of unauthorized software within the mobile device, or unauthorized modification of the POS application itself.

If the validation server determines that all of the security related information is valid (i.e., not indicative of any security breach), the validation server signs the public key of the POS application with its digital signature and sends the signed public key back to the mobile device. The POS application in the mobile device then forwards its public key, signed by the validation server, to the card reader.

Upon receiving the server-signed public key of the POS application, the card reader knows that the POS application can be trusted and, therefore, that a secure communication session can be established with the POS application. Likewise, the POS application at this point also knows that the card reader can be trusted. Accordingly, in that event the card reader and the POS application proceed to establish a secure communication session each other. Establishment of the secure communication session involves the card reader and the mobile device each generating a symmetric secure session key, which they then use to encrypt and decrypt data communicated between them, such as customer PINs and card data.

Note that while the example of a credit card is used throughout this description for purposes of explanation, the technique introduced here can also be applied to systems and devices that read other types of payment cards, such as debit cards, automated teller machine (ATM) cards, prepaid gift cards, etc. Likewise, the technique introduced here is not limited to systems that handle payment transactions; for example, the technique could be applied to systems and devices that read other types of cards carrying confidential or sensitive information, such as a driver's license, identity card, security access card, etc. Additionally, the term "sale", such as in "point-of-sale" (POS) refers to any type of payment-oriented transaction, including lease, rental or payment for services, for example, and is not limited to an actual purchase or transfer of ownership.

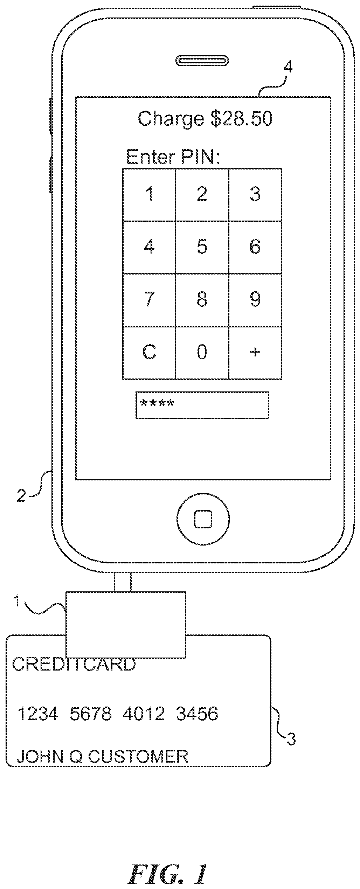

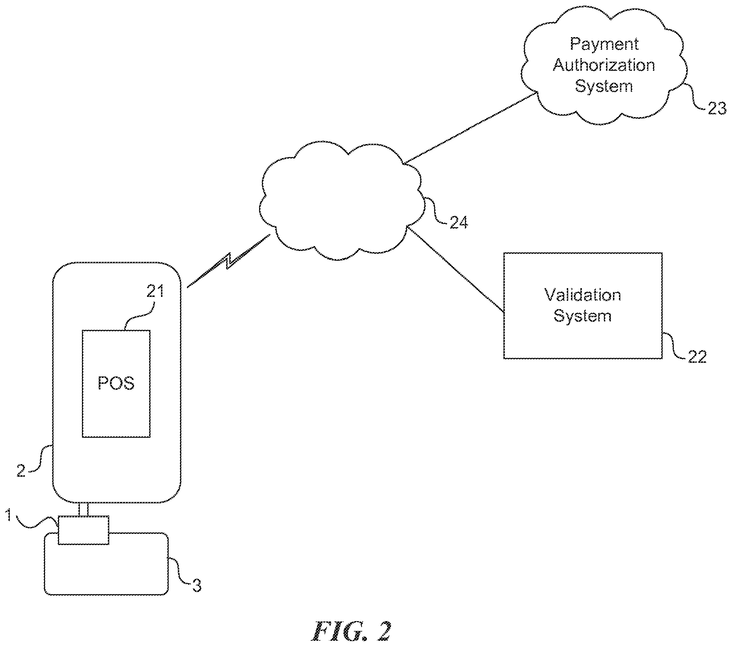

Refer now to Figures 1 and 2. Figure 1 illustrates an example of a configuration in which a card reader is coupled to a mobile device (which in the illustrated example is a smartphone) belonging to merchant, to facilitate transactions with payment cards (e.g., credit cards, debit cards, etc.). Figure 2 shows a network environment in which these device can operate. The card reader 1 can plug into a standard connector of the mobile device 2, such as its audio jack or micro-USB port. A payment card 3 and can be read by swiping the card 3 through the card reader 1. The term "swipe" as used herein refers to any manner of triggering a card reader to read data from a card, such as by passing a card into or through a magnetic stripe card reader, optical scanner, smartcard (card with an embedded IC chip) reader, radio frequency identification (RFID) reader, or the like.

When a new payment transaction is to be initiated, the merchant provides an input to a user interface of the mobile device 2 to indicate that fact. In response, a POS application 21 (Figure 2) executing in the mobile device 2 and causes a display of the mobile device 2 to display a screen 4 to enable initiation of the transaction. In certain implementations, before data is read from the card 3, the merchant is prompted by the user interface to have the customer enter his or her PIN, as shown. The user can do so by typing the PIN on a touchscreen display of the mobile device 2. The POS application 21 then communicates the PIN to the card reader 1, which uses the PIN to "unlock" the customer's card in order to read (or decrypt) data from the card 3. Once the card data has been read from the card 3, it is passed by the card reader 1 to the POS application 21, which then forwards the card data along with information about the transaction information (e.g., transaction amount, date and time, and merchant identification) to a remote payment authorization system 23 to request authorization of the payment. Details of the payment authorization system 23 are not germane to the technique being introduced here. Note, however, that the payment authorization system 23 may include multiple business entities and multiple computers and/or other devices. For example, the payment authorization system 23 may include one or more banks and/or other financial institutions, including a card issuer, an acquirer, a credit card network (e.g., VISA or MASTERCARD), etc.

As indicated above, it is desirable to protect the confidentiality of the user's PIN and card data. Therefore, the technique introduced here enables a secure session to be established between the card reader 1 and the POS application 21 only after both the card reader 1 and the POS application 21 have been validated by a separate, trusted validation system. The validation is performed by a remote validation system 22, which is or includes one or more server computers coupled via a network 24 to the mobile device 2, as shown in Figure 2. The network 24 can be a combination of two or more networks, which may be different types of networks. For example, in the illustrated embodiment the network 24 would include a wireless portion and a wired portion. The wireless portion can be or include, for example, a cellular telecommunications network, a WiFi/IEEE 802.11 compatible network, a Bluetooth connection, or the like, or a combination of such networks/connections. The wired portion can be or include, for example, the internet, a Metropolitan Area Network (MAN), a corporate Wide Area Network (WAN), a wired local area network (LAN), or the like, or a combination of such networks.

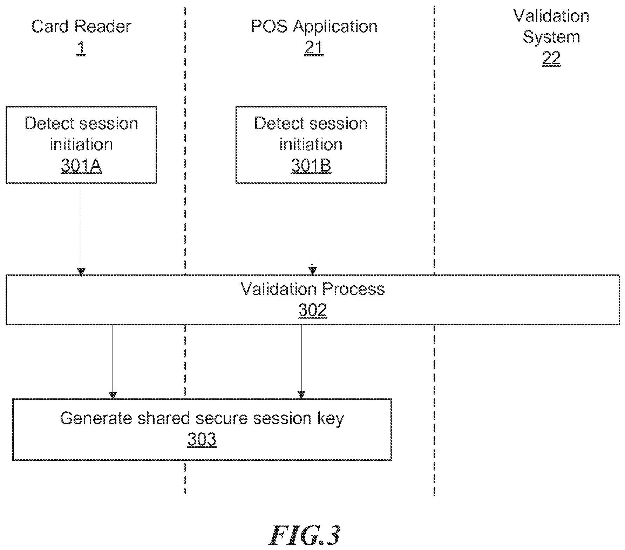

Figure 3 illustrates an example of a process of establishing a secure session between the card reader 1 and the POS application 21, according to the technique introduced here. As shown, the card reader 1 and the POS application 21 independently detect that a card reader session has been initiated (steps 301A and 301B); for example, they each independently detect that the card reader 1 has been connected to the mobile device 2. In response to that detection, the card reader 1, the POS application 21 and the validation system 22 jointly execute the validation process 302. If the validation process 302 completes successfully, the card reader 1 and the POS application 21 then jointly establish a secure communication session with each other (step 303), by generating a shared secure session key (encryption key). The card reader 1 and the POS application 21 subsequently use the shared secure session key for communication of encrypted data (e.g., PIN and card data) with each other. In certain embodiments, the card reader 2 and the POS application 21 use the Diffie-Hellman technique to generate the shared secure session key.

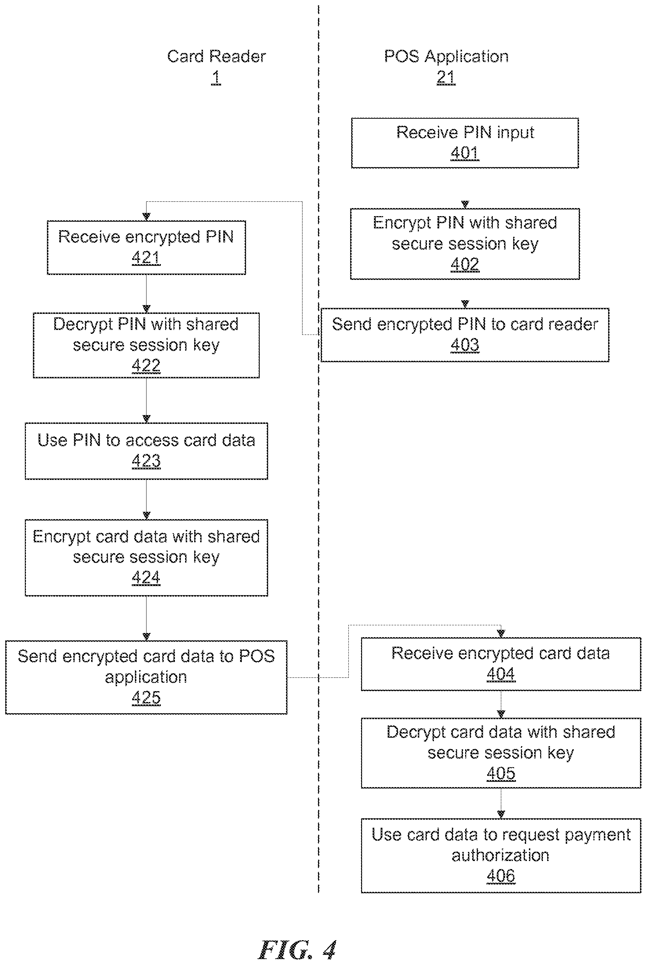

Figure 4 shows a process by which data can be communicated between the POS application 21 and the card reader 1 to request authorization for a payment transaction, after a secure session has been established between them. Initially the POS application 21 receives a PIN input by the customer on the mobile device 2 of the merchant (step 401). The POS application 21 then encrypts the PIN (step 402) with the shared secure session key that was established immediately following the validation process 302, and then sends the encrypted PIN to the card reader 1. The card reader 1 receives the encrypted PIN (step 421), decrypts the PIN with its copy of the shared secure session key (step 422), and then uses the PIN to access the card data stored on the customer's card 3 (e.g., card number, expiration date, and CVV) (step 423).

The card reader 1 then encrypts the card data using the shared secure session key (step 424) and sends the encrypted card data to the POS application 21 (step 425). The POS application 21 receives the encrypted card data from the card reader 1 (step 404), decrypts the card data with its copy of the shared secure session key (step 405), and then uses the card data to request authorization for the transaction (step 406) by sending an authorization request message containing the card data and transaction data to the payment authorization system 23).

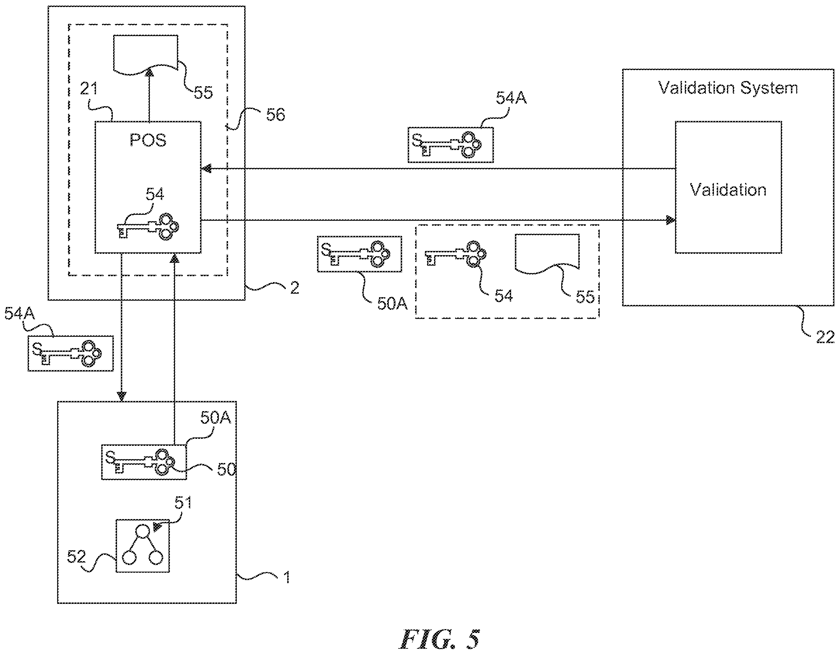

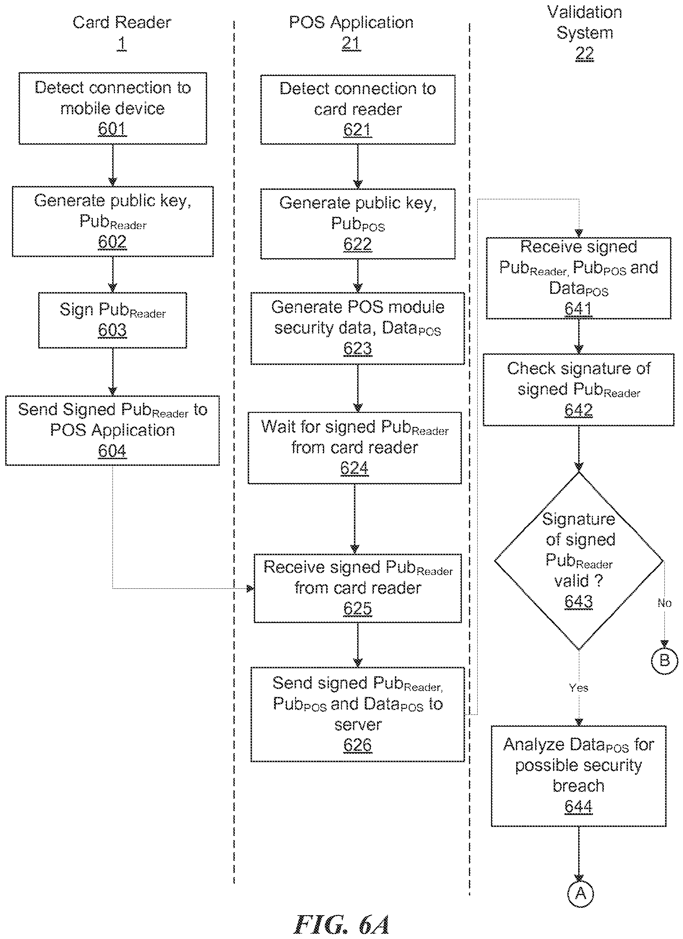

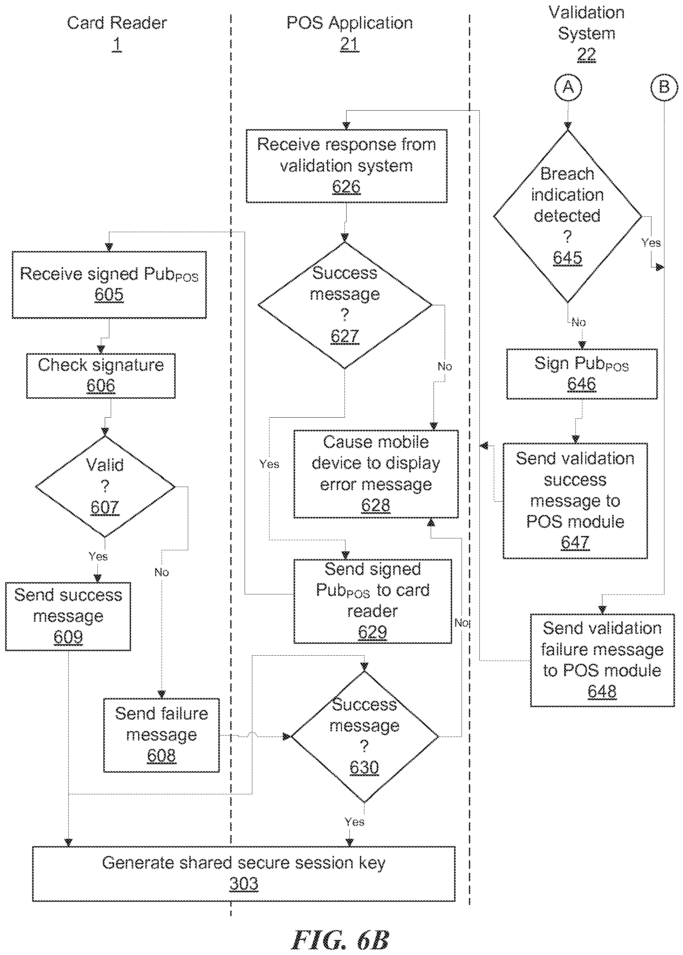

The validation process 302 (Figure 3) will now be described in greater detail with reference to Figures 5 and 6. Initially, the card reader 1 detects that it has been connected to the mobile device 2 (step 601), and concurrently with that action the POS application 21 detects that the mobile device 2 has been connected to the card reader 1 (step 621). Any known or convenient technique for detecting a connection between two devices can be used here. Next, the card reader 1 generates a public cryptographic key, Pub_{Reader} 50 (step 602). The card reader's public-key Pub_{Reader} 50 may be generated based on a key tree 51 that has been stored in a nonvolatile memory 52 in the card reader 2 by the manufacturer of the card reader. The card reader 2 then signs its public key Pub_{Reader} 50 with a digital signature uniquely associated with the card reader 1 (step 603).

Concurrently with the two aforementioned steps (602 and 603), the POS application 21 generates its own public cryptographic key, Pub_{POS} 54 (step 622). Additionally, the POS application 21 generates additional security data, Data_{POS} 55 (step 623). The additional security data Data_{POS} 55 includes information about the POS application itself and may also include information about the sandbox environment 56 in which it operates in the mobile device 2 (e.g., the operating system and/or other software in the mobile device 2). The validation system 22 subsequently uses this additional security data Data_{POS} 55 to determine whether the POS application 21 has been subject to a security breach, as discussed below (steps 644, 645).

The reason for the generation and use of additional security data Data_{POS} 55 is that, in at least some implementations, the POS application 21 may be viewed as less trustworthy than the card reader 1. For example, the card reader 1 by its nature does not need to be programmable or configurable by the end user. Indeed, for security reasons it may be desirable that the card reader 1 not be programmable or configurable at all once it leaves the factory. Accordingly, the card reader 1 may be designed with no post-manufacture programmability or configurability and with very robust tamper protection. In contrast, the mobile device 2 (which may be a smartphone or tablet, for example) is designed to be highly programmable and configurable by the end user. Therefore, the mobile device 2 and the POS application 21 within it may be considered to be more vulnerable to malware and jailbreaking than the card reader 1. Additionally, the manufacturer of the card reader 1 may be the same entity as, or may be affiliated with, the entity that operates the validation system 22, which can facilitate validation of the card reader 1 as discussed below.

Referring again to Figures 5 and 6, after the card reader 1 generates and signs its public key Pub_{Reader} 50 (steps 602 and 603), it sends its signed public key Pub_{Reader} 50A to the POS application 21 (via the physical connection between the card reader 1 and the mobile device 2) (step 604). The POS application 21, after generating its own public key 54 and additional security data Data_{POS} 55, waits to receive the signed public key Pub_{Reader} 50 of the card reader 1 (step 624). After receiving the signed public key Pub_{Reader} 50 of the card reader 1 (step 625), the POS application 21 sends these three data sets (or more precisely, causes the mobile device 2 to send them) to the remote validation system 22 (step 626). Before sending these data sets to the remote validation system 22, the POS application 21 may also authenticate and/or digitally signs its own public key Pub_{POS} 54 and/or the additional security data Data_{POS} 55. For example, the POS application 21 may authenticate its public key Pub_{POS} 54 and the additional security data Data_{POS} 55 by using a symmetric cryptographic operation (in contrast with digital signing, which is an asymmetric operation); this authentication operation may encapsulate the POS application's public key Pub_{POS} 54 and the additional security data Data_{POS} 55 within a common container, as represented by the dashed box in Fig. 5. The POS application 21 might instead authenticate its public key Pub_{POS} 54 but not the additional security data Data_{POS} 55, or might digitally sign its public key Pub_{POS} 54 but not the additional security data Data_{POS} 55, or might digitally sign its public key Pubpos 54 and the additional security data Datapos 55.

All of the aforementioned data may be transmitted by the mobile device 2 over a standard cellular communications network (e.g., 3G or LTE/4G network) and then subsequently routed to the validation system 22 via the Internet, for example. Different types of networks and connections may be used to convey this information from the mobile device to the validation system 22, such as a WiFi network, Bluetooth or Bluetooth Low Energy (BLE) connection, etc.

The validation system 22 receives these data items (step 641) and then checks the digital signature of the signed public key Pub_{Reader} 50 of the card reader 1 (step 642). It can be assumed that the validation system 22 stores information in its internal memory to allow it to determine the validity of the digital signature of the card reader 1. The manufacturer of the card reader 1 may be the entity that operates the validation system 22 and may also be the manufacturer of the POS application 21. This scenario facilitates the determination of whether the received security information is valid. For example, the manufacturer may have stored the key tree 51 and digital signature information in the card reader 1 at the time of manufacture and may also have stored that information in (or made it otherwise accessible to) the validation system 22.

If the validation system 22 determines (step 643) that the signature is not valid, it is assumed that the card reader 1 has been subject to a security breach. In that event, the authentication server causes a validation failure message to be sent to the POS module (step 649) (e.g., via the reverse route mentioned above), which then causes an appropriate error message to be output by the mobile device 2 (step 628). In that case, the validation process terminates, such that a secure session is not permitted to be established between the card reader 1 and the POS module. In more practical terms, in that event that particular card reader cannot be used with that particular mobile device. Additionally, the validation system 22 can maintain knowledge of this failure, such that the card reader 1 can be prevented from being used with any other, even if a subsequent attempt with another mobile device includes a valid signature of the card reader's public key Pub_{Reader} 50.

If the validation system 22 determines (step 643) that the signature of the card reader 1 is valid, the validation system 22 proceeds to analyze the additional security data Data_{POS} 55 provided by the POS application 21 (step 644) to check for any indication of a security breach of the POS application 21 (or other software in the mobile device).

The additional security data Datapos 55 includes information about the POS application 21 and may also include information about the sandbox environment 56 in which the POS application 21 operates. Therefore, the validation system 22 uses the additional security data Data_{POS} 55 to determine whether the POS application 21 has been subject to a security breach. The additional security data Data_{POS} 55 may be or may include a "fingerprint" of the POS application 21. The fingerprint can also be based on the sandbox (software) environment 56 in which the POS application 21 operates. The fingerprint can be, for example, a checksum, a result of a cyclic redundancy check (CRC) function, a result of a cryptographic hash function, or a sampling of the POS application and/or its sandbox environment 56.

The validation system 22 can determine the validity of the fingerprint by comparing it to one or more stored fingerprints. For example, the validation system 22 may compare the received fingerprint to a stored fingerprint previously generated from a separate copy of the POS application (of the same version as the POS application 21 in the mobile device 2) that is known not to have been subject to tampering. Obtaining such a copy would be particularly simple if, for example, the manufacturer of the POS application 21 is also the entity that operates the validation system 22 or is affiliated with that entity.

Additionally or alternatively, the validation system 22 may use one or more "crowd-sourced" fingerprints to check the fingerprint from the mobile device 2. For example, the validation system 22 can store fingerprints that have been received from other user devices and can compare the fingerprint received from the mobile device 2 to the set of stored fingerprints. The stored fingerprints can include fingerprints associated with the POS application and sandbox environment received from other user devices that are executing various operating systems. For example, the stored fingerprints might include fingerprints received from each of various different combinations of a particular smartphone model running a particular version of a particular mobile operating system and a corresponding particular version of the POS application (e.g., a Samsung Galaxy phone executing a first version of the Android operating system and a version of the POS application associated with the first version of the Android operating system; a second Samsung Galaxy phone executing a second version of the Android operating system and a version of the software application associated with the second version of the Android operating system; etc.).

The validation system 22 may store an association (e.g., in a relational database) between an identification code for each user device and the fingerprint received from that mobile device. The validation system 22 can compute a relative frequency for any particular fingerprint, e.g., the number or percentage of user devices that have a fingerprint that is identical to the particular fingerprint. Since the fingerprints are generated based on the content of the sandboxed environment, fingerprints generated from user devices that are the same and are executing the same operating system and the same version of the POS application should match (e.g., fingerprints should be similar or identical). For example, if two user devices are both iPhones and are executing the same version of the iOS operating system and the same version of the POS application, then the fingerprints associated with the two user devices should be identical. Since compromised devices represent a very small (or zero) percentage of the total number of devices, the fingerprints associated with normally operating devices should have a significantly higher relative frequency.

Therefore, when the validation system 22 receives a fingerprint from the mobile device 2, the validation system 22 can compare the received fingerprint with its set of stored fingerprints to detect any anomalies. For example, the validation system 22 can determine the relative frequency of the received fingerprint compared to fingerprints received across mobile devices from an install base (e.g., across user devices that are the same and executing the same operating system and version of the POS application), and compare the relative frequency to a threshold value. If the relative frequency is above the threshold value, then the validation system 22 can determine that the received fingerprint is valid. If the relative frequency is below the threshold value, then the validation system 22 can determine that the fingerprint is invalid. The predetermined threshold can be based on the number of stored fingerprints, for example.

The step (644) of analyzing the additional security data Data_{POS} 55 includes checking for evidence of any one or more of the following types of security breaches: 1) jailbreaking of the mobile device; 2) operation of a debugger on the mobile device; 3) presence of unauthorized software within the mobile device; or unauthorized modification of the POS application 21. The validation system's analysis of the additional security data (step 644) may primarily or entirely look for evidence of security breaches that have occurred within the sandbox environment 56. However, the analysis may also be able to detect certain types of security breaches that have occurred outside of the sandbox environment 56 within the mobile device 2. For example, the validation system 22 knows that the POS application 21 operates in a sandbox environment 56; consequently, if the analysis of the additional security data Data_{POS} 55 indicates that the POS application 21 has permissions inconsistent with the existence of a sandbox, that may be interpreted as evidence of jailbreaking.

Additionally, the POS application 21 normally will have limited visibility of anything outside of the sandbox environment 56. However, the operating system of a typical mobile device can make certain global changes that affect all applications running in the mobile device, and such changes are therefore visible to the POS application 21. Mostly there will be relatively few data items that the POS application 21 can read outside of the sandbox environment 56, and even fewer data items that the POS application 21 should be able to write outside of the sandbox environment 56. Therefore, if analysis of the additional security data Data_{POS} 55 indicates that the POS application 21 can write data outside of the sandbox environment 56 in an unexpected way, that also may be interpreted as evidence of a security breach.

Referring still to Figures 5 and 6, if the validation system 22 detects any indication of a security breach from the additional security data Data_{POS} 55 (step 645), the validation system 22 sends a validation failure messages to the POS application 21 (step 648). As noted above, this action in effect precludes establishment of a secure session between the card reader 1 and the POS application 21. In this event, the validation system 22 can maintain knowledge that the POS application 21 is suspect.

If the validation system 22 detects no indication of a security breach in the additional security data (step 645), it digitally signs the public key Pub_{POS} 54 of the POS application 21 (step 646) and sends that signed public key Pub_{POS} 54A in a validation success message to the POS application 21 (step 647). The validation system 22 may also authenticate (e.g., using a symmetric cryptographic operation) and/or digitally signs the public key PubReader 50 of the card reader and sends that to the POS application 21 in step 647.

The POS application 21 receives the validation system 22's response (step 626). If that response is a validation failure message, then as noted above, the POS application 21 causes an error message to be displayed on the mobile device 2 (step 628), and the process terminates. On the other hand, if the response from the validation system 22 is a validation success message, the POS application 21 extracts its own public key Pub_{POS} 54A signed by the validation system 22 , and sends its signed public key Pub_{POS} 54A to the card reader 1 (step 629). The card reader 1 receives that signed key Pub_{POS} 54A (step 605) and checks the digital signature of the validation system 22 (step 606). It can be assumed that the card reader 1 stores information in its internal memory to allow it to determine the validity of the digital signature of the validation system 22. The manufacturer of the card reader 1 may also be the entity that operates the validation system 22, and may also be the manufacturer of the POS application 21, as noted above.

If the card reader 1 determines (step 607) that the digital signature of the validation system 22 is not valid, it sends a validation failure message to the POS application 21 (step 608). If, on the other hand, the card reader 1 determines that the digital signature of the validation system 22 is valid, it sends a validation success message to the POS application 21 (step 609). The card reader 1 then cooperates with the POS application 21 to generate a secure session key, as mentioned above (step 303; see also Figure 3). The secure session key may be a symmetric encryption key that is shared by the card reader 1 and the POS application 21, i.e., the same secure session key value is computed separately by the card reader 1 and the POS application 21, based on a sequence of communications between them. The card reader 1 and the POS application 21 may use the Diffie-Hellman technique to generate the shared secure session key.

Hence, the POS application 21 receives the validation failure or success message (as the case may be) from the card reader 1 and, if it was a validation failure message, causes the mobile device 2 to output an error message to the user (step 628). If, however, the message was a validation success message (step 630), the POS application 21 cooperates with the card reader 1 as explained above to generate the shared secure session key (step 303).

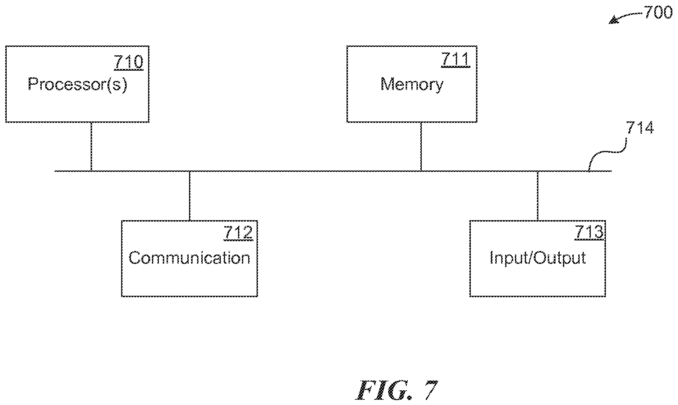

Figure 7 illustrates at a high-level an example of the hardware architecture of a processing system that can be used to implement the validation system 22 or the mobile device 2 (although the implementation would be different for either case). Note that the validation system 22 can comprise multiple instances of the architecture shown in Figure 7 (i.e., multiple computers), which may be coupled to each other via a network or multiple networks. Furthermore, the computer system that implements the validation system 22 may perform functions other than validation.

The architecture 700 includes one or more processors 710, memory 711, one or more communication device(s) 712, and one or more input/output (I/O) devices 713, all coupled to each other through an interconnect 714. The interconnect 714 may be or include one or more conductive traces, buses, point-to-point connections, controllers, adapters and/or other conventional connection devices. The processor(s) 710 may be or include, for example, one or more general-purpose programmable microprocessors, microcontrollers, application specific integrated circuits (ASICs), programmable gate arrays, or the like, or a combination of such devices. The processor(s) 710 control the overall operation of the processing device 700.

Memory 711 may be or include one or more physical storage devices, which may be in the form of random access memory (RAM), read-only memory (ROM) (which may be erasable and programmable), flash memory, miniature hard disk drive, or other suitable type of storage device, or a combination of such devices. Memory 711 may store data and instructions that configure the processor(s) 710 to execute operations in accordance with the techniques described above. The communication devices 712 may be or include, for example, an Ethernet adapter, cable modem, Wi-Fi adapter, cellular transceiver, Bluetooth or BLE transceiver, or the like, or a combination thereof. Depending on the specific nature and purpose of the processing device 700, the I/O devices 713 can include devices such as a display (which may be a touch screen display), audio speaker, keyboard, mouse or other pointing device, microphone, camera, etc.

In the case of the mobile device 2, the communication devices 712 can be or include, for example, a cellular telecommunications transceiver (e.g., 3G or 4G/LTE), Wi-Fi transceiver, Bluetooth or BLE transceiver, or the like, or a combination thereof. In the case of the validation system 22, the communication devices 712 can be or include, for example, any of the aforementioned types of communication devices, a wired Ethernet adapter, cable modem, DSL modem, or the like, or a combination of such devices. Additionally, the mobile device 2 includes a connector (not shown) to connect to the card reader 1 as described above. The connector can be, for example, a standard audio jack, micro-USB connector, or any other known or convenient type of connector.

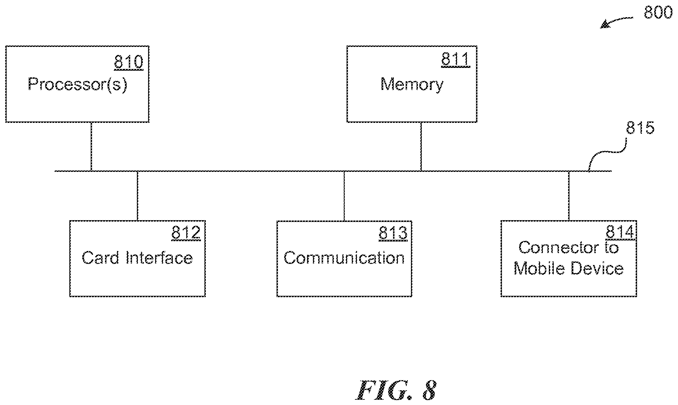

Figure 8 illustrates at a high-level an example of the hardware architecture of the card reader 1. The architecture 800 includes one or more processors 810, memory 811, a card interface 812, communication device 813, and a connector 814, all coupled to each other through an interconnect 815. The interconnect 815 may be or include one or more conductive traces, buses, point-to-point connections, controllers, adapters and/or other conventional connection devices. The processor(s) 810 may be or include, for example, one or more general-purpose programmable microprocessors, microcontrollers, application specific integrated circuits (ASICs), programmable gate arrays, or the like, or a combination of such devices. The processor(s) 810 control the overall operation of the processing device 800.

Memory 811 may be or include one or more physical storage devices, which may be in the form of random access memory (RAM), read-only memory (ROM) (which may be erasable and programmable), flash memory, miniature hard disk drive, or other suitable type of storage device, or a combination of such devices. Memory 811 may store data and instructions that configure the processor(s) 810 to execute operations in accordance with the techniques described above.

The card interface 812 is a mechanism for reading data from a payment card and may be, for example, a magnetic stripe reader, smartcard IC chip reader, optical code reader, radio frequency identification (RFID) tag reader, or other similar device. The connector 814 is for connecting the card reader 1 to the mobile device and can be, for example, a standard audio plug, micro-USB connector, or any other known or convenient type of connector.

Unless contrary to physical possibility, it is envisioned that (i) the methods/steps described herein may be performed in any sequence and/or in any combination, and that (ii) the components of respective embodiments may be combined in any manner.

The machine-implemented operations described above can be implemented by programmable circuitry programmed/configured by software and/or firmware, or entirely by special-purpose circuitry, or by a combination of such forms. Such special-purpose circuitry (if any) can be in the form of, for example, one or more application-specific integrated circuits (ASICs), programmable logic devices (PLDs), field-programmable gate arrays (FPGAs), etc.

Software to implement the techniques introduced here may be stored on a machine-readable storage medium and may be executed by one or more general-purpose or special-purpose programmable microprocessors. A "machine-readable medium", as the term is used herein, includes any mechanism that can store information in a form accessible by a machine (a machine may be, for example, a computer, network device, cellular phone, personal digital assistant (PDA), manufacturing tool, any device with one or more processors, etc.). For example, a machine-accessible medium includes recordable/non-recordable media (e.g., read-only memory (ROM); random access memory (RAM); magnetic disk storage media; optical storage media; flash memory devices; etc.), etc.

Note that any and all of the embodiments described above can be combined with each other, except to the extent that it may be stated otherwise above or to the extent that any such embodiments might be mutually exclusive in function and/or structure.

Although the present invention to which this European patent relates has been described with reference to specific exemplary embodiments, it will be recognized that the invention is not limited to the embodiments described, but can be practiced with modification and alteration within the scope of the appended claims. Accordingly, the specification and drawings are to be regarded in an illustrative sense rather than a restrictive sense.

## Claims

1. A method comprising:
detecting, by a point-of-sale, POS, software module (21) that executes in a mobile device (2), initiation of a session between the POS software module and a card reader (1) coupled to the mobile device;
receiving, at the POS software module from the card reader, security related information (50) of the card reader, wherein the security related information of the card reader comprises a public key of the card reader generated and signed by the card reader;
causing the security related information of the card reader and security related information (54, 55) of the POS software module to be transmitted from the mobile device for delivery to a remote computer system (22), for validation by the remote computer system, wherein the security related information of the POS software module includes a public key (54A) of the POS software module, generated by the POS software module, and data (55) indicative of a software environment (56) of the POS software module, wherein the software environment (56) of the POS software module (21) is an operating system and/or other software in the mobile device;
validating, by the remote computer system, the security related information of the POS software module and the security related information of the card reader, wherein the validating comprises:
checking the signature of the signed public key of the card reader; and
analyzing the data (55) indicative of a software environment (56) of the POS software module to check for any indication of a security breach of the POS software module, wherein the security breach is at least one of:
jailbreaking of the mobile device;
operation of a debugger on the mobile device;
presence of unauthorized software within the mobile device; and
unauthorized modification of the POS software;
signing, by the remote computer system, the public key (54) of the POS software module if no indication of a security breach is detected in the data (55) indicative of a software environment (56) of the POS software module and the signature of the signed public cryptographic key of the card reader is valid;
sending, by the remote computer system, the public key of the POS software module, signed by the remote computer system to the POS software module;
receiving, at the POS software module, the public key of the POS software module, signed by the remote computer system; and
sending, by the POS software module, the public key of the POS software module, signed by the remote computer system, to the card reader; and
checking, by the card reader, the signature of the remote computer system in response to receiving the public key of the POS software module, signed by the remote computer system;
sending, by the card reader, a validation success message to the POS software module if the signature of the remote computer system is determined to be valid, the card reader and the POS software module cooperatively generating a secure session key (50A) with which to perform encrypted communication between the POS software module and the card reader once the POS software module receives the validation success message.

2. A method as recited in claim 1, further comprising, during a financial transaction involving a payment card (3) of a customer:
using the secure session key in the POS software module to encrypt a personal identification number, PIN, of the customer; and
sending the encrypted PIN from the POS software module to the card reader.

3. A method as recited in claim 1, wherein generating the secure session key comprises using a Diffie-Hellman message exchange to generate the secure session key.

4. A system comprising a mobile device (2) executing a point-of-sale software module (21), a card reader (1) coupled to the mobile device (2), and a remote computer system (22), the system adapted to perform the method of any of claims 1-3.

5. A system as recited in claim 4, wherein said steps further comprise, during a financial transaction involving a payment card of a customer:
receiving from the POS software module an encrypted personal identification number, PIN, of the customer;
using the secure session key in the card reader to decrypt the PIN; and
using the PIN to access data on the payment card.

6. A machine-readable medium comprising instructions that, when executed in the system of claim 4, cause the system to carry out the method of any of claims 1-3.

## Patentansprüche

1. Verfahren, das Folgendes umfasst:
Detektieren durch ein Verkaufsort-Softwaremodul, POS-Softwaremodul, (21), das in einer Mobilvorrichtung (2) abläuft, der Initiierung einer Sitzung zwischen dem POS-Softwaremodul und einem Kartenlesegerät (1), das mit der Mobilvorrichtung gekoppelt ist;
Empfangen in dem POS-Softwaremodul von dem Kartenlesegerät sicherheitsbezogener Informationen (50) des Kartenlesegeräts, wobei die sicherheitsbezogenen Informationen des Kartenlesegeräts einen öffentlichen Schlüssel des Kartenlesegeräts, der durch das Kartenlesegerät erzeugt und signiert ist, umfassen;
Veranlassen, dass die sicherheitsbezogenen Informationen des Kartenlesegeräts und sicherheitsbezogene Informationen (54, 55) des POS-Softwaremoduls von der Mobilvorrichtung zur Zustellung zu einem entfernten Computersystem (22) zur Validierung durch das entfernte Computersystem gesendet werden, wobei die sicherheitsbezogenen Informationen des POS-Softwaremoduls einen öffentlichen Schlüssel (54A) des POS-Softwaremoduls, der durch das POS-Softwaremodul erzeugt ist, und Daten (55), die eine Softwareumgebung (56) des POS-Softwaremoduls angeben, enthalten, wobei die Softwareumgebung (56) des POS-Softwaremoduls (21) ein Betriebssystem und/oder andere Software in der Mobilvorrichtung ist;
Validieren durch das entfernte Computersystem der sicherheitsbezogenen Informationen des POS-Softwaremoduls und der sicherheitsbezogenen Informationen des Kartenlesegeräts, wobei die Validierung Folgendes umfasst:
Überprüfen der Signatur des signierten öffentlichen Schlüssels des Kartenlesegeräts; und
Analysieren der Daten (55), die eine Softwareumgebung (56) des POS-Softwaremoduls angeben, um auf irgendeine Angabe eines Sicherheitsverstoßes des POS-Softwaremoduls zu überprüfen, wobei der Sicherheitsverstoß wenigstens eines aus dem Folgenden ist:
"Jailbreaking" der Mobilvorrichtung;
Betrieb eines Debuggers auf der Mobilvorrichtung;
Vorhandensein von nicht autorisierter Software innerhalb der Mobilvorrichtung; und
nicht autorisierte Modifikation der POS-Software;
Signieren durch das entfernte Computersystem des öffentlichen Schlüssels (54) des POS-Softwaremoduls, falls keine Angabe eines Sicherheitsverstoßes in den Daten (55), die eine Softwareumgebung (56) des POS-Softwaremoduls angeben, detektiert wird und die Signatur des signierten öffentlichen kryptographischen Schlüssels des Kartenlesegeräts gültig ist;
Senden durch das entfernte Computersystem des öffentlichen Schlüssels des POS-Softwaremoduls signiert durch das entfernte Computersystem zu dem POS-Softwaremodul;
Empfangen in dem POS-Softwaremodul des öffentlichen Schlüssels des POS-Softwaremoduls signiert durch das entfernte Computersystem; und
Senden durch das POS-Softwaremodul des öffentlichen Schlüssels des POS-Softwaremoduls signiert durch das entfernte Computersystem zu dem Kartenlesegerät; und
Überprüfen durch das Kartenlesegerät der Signatur des entfernten Computersystems in Reaktion auf das Empfangen des öffentlichen Schlüssels des POS-Softwaremoduls signiert durch das entfernte Computersystem;
Senden durch das Kartenlesegerät einer Validierungserfolgsnachricht zu dem POS-Softwaremodul, falls die Signatur des entfernten Computersystems als gültig bestimmt wird, wobei das Kartenlesegerät und das POS-Softwaremodul zusammenwirkend einen sicheren Sitzungsschlüssel (50A), mit dem verschlüsselte Kommunikation zwischen dem POS-Softwaremodul und dem Kartenlesegerät auszuführen ist, erzeugen, sobald das POS-Softwaremodul die Validierungserfolgsnachricht empfängt.

2. Verfahren nach Anspruch 1, das ferner während einer finanziellen Transaktion, die eine Bezahlkarte (3) eines Kunden einbezieht, Folgendes umfasst:
Verwenden des sicheren Sitzungsschlüssels in dem POS-Softwaremodul zum Verschlüsseln einer persönlichen Identifizierungsnummer, PIN, des Kunden; und
Senden der verschlüsselten PIN von dem POS-Softwaremodul zu dem Kartenlesegerät.

3. Verfahren nach Anspruch 1, wobei das Erzeugen des sicheren Sitzungsschlüssels das Verwenden eines Diffie-Hellman-Nachrichtenaustauschs zum Erzeugen des sicheren Sitzungsschlüssels umfasst.

4. System, das eine Mobilvorrichtung (2), die ein Verkaufsort-Softwaremodul (21) ausführt, ein Kartenlesegerät (1), das mit der Mobilvorrichtung (2) gekoppelt ist, und ein entferntes Computersystem (22) umfasst, wobei das System ausgelegt ist, das Verfahren nach einem der Ansprüche 1-3 auszuführen.

5. System nach Anspruch 4, wobei die Schritte ferner während einer finanziellen Transaktion, die eine Bezahlkarte eines Kunden einbezieht, Folgendes umfassen:
Empfangen von dem POS-Softwaremodul einer verschlüsselten persönlichen Identifizierungsnummer, PIN, des Kunden;
Verwenden des sicheren Sitzungsschlüssels in dem Kartenlesegerät, um die PIN zu entschlüsseln; und
Verwenden der PIN, um auf Daten auf der Bezahlkarte zuzugreifen.

6. Maschinenlesbares Medium, das Anweisungen umfasst, die dann, wenn sie in dem System nach Anspruch 4 ausgeführt werden, das System veranlassen, das Verfahren nach einem der Ansprüche 1-3 auszuführen.

## Revendications

1. Procédé comprenant :
la détection, par un module logiciel de point de vente, POS, (21) qui s'exécute dans un dispositif mobile (2), du lancement d'une session entre le module logiciel POS et un lecteur de carte (1) couplé au dispositif mobile ;
la réception, au niveau du module logiciel POS à partir du lecteur de carte, d'informations relatives à la sécurité (50) du lecteur de carte, dans lequel les informations relatives à la sécurité du lecteur de carte comprennent une clé publique du lecteur de carte générée et signée par le lecteur de carte ;
la transmission des informations relatives à la sécurité du lecteur de carte et d'informations relatives à la sécurité (54, 55) du module logiciel POS à partir du dispositif mobile pour la fourniture à un système informatique distant (22), pour validation par le système informatique distant, dans lequel les informations relatives à la sécurité du module logiciel POS comprennent une clé publique (54A) du module logiciel POS, générée par le module logiciel POS, et des données (55) indicatives d'un environnement logiciel (56) du module logiciel POS, dans lequel l'environnement logiciel (56) du module logiciel POS (21) est un système d'exploitation et/ou un autre logiciel dans le dispositif mobile ;
la validation, par le système informatique distant, des informations relatives à la sécurité du module logiciel POS et des informations relatives à la sécurité du lecteur de carte, la validation comprenant :
la vérification de la signature de la clé publique signée du lecteur de carte ; et
l'analyse des données (55) indicatives d'un environnement logiciel (56) du module logiciel POS pour vérifier toute indication d'une faille de sécurité du module logiciel POS, dans lequel la faille de sécurité est au moins l'une parmi :
un débridage du dispositif mobile ;
l'utilisation d'un débogueur sur le dispositif mobile ;
la présence de logiciels non autorisés dans le dispositif mobile ; et
la modification non autorisée du logiciel POS ;
la signature, par le système informatique distant, de la clé publique (54) du module logiciel POS si aucune indication d'une faille de sécurité n'est détectée dans les données (55) indicatives d'un environnement logiciel (56) du module logiciel POS et que la signature de la clé cryptographique publique signée du lecteur de carte est valide ;
l'envoi, par le système informatique distant, de la clé publique du module logiciel POS, signée par le système informatique distant, au module logiciel POS ;
la réception, au niveau du module logiciel POS, de la clé publique du module logiciel POS, signée par le système informatique distant ; et
l'envoi, par le module logiciel POS, de la clé publique du module logiciel POS, signée par le système informatique distant, au lecteur de carte ; et
la vérification, par le lecteur de carte, de la signature du système informatique distant en réponse à la réception de la clé publique du module logiciel POS, signée par le système informatique distant ;
l'envoi, par le lecteur de carte, d'un message de réussite de validation au module logiciel POS si la signature du système informatique distant est déterminée comme étant valide, le lecteur de carte et le module logiciel POS générant en coopération une clé de session sécurisée (50A) avec laquelle effectuer une communication chiffrée entre le module logiciel POS et le lecteur de carte une fois que le module logiciel POS a reçu le message de réussite de validation.

2. Procédé selon la revendication 1, comprenant en outre, pendant une transaction financière impliquant une carte de paiement (3) d'un client :
l'utilisation de la clé de session sécurisée dans le module logiciel POS pour chiffrer un numéro d'identification personnel, PIN, du client ; et
l'envoi du PIN chiffré à partir du module logiciel POS au lecteur de carte.

3. Procédé selon la revendication 1, dans lequel la génération de la clé de session sécurisée comprend l'utilisation d'un échange de messages Diffie-Hellman pour générer la clé de session sécurisée.

4. Système comprenant un dispositif mobile (2) exécutant un module logiciel de point de vente (21), un lecteur de carte (1) couplé au dispositif mobile (2) et un système informatique distant (22), le système étant conçu pour mettre en œuvre le procédé de l'une quelconque des revendications 1 à 3.

5. Système selon la revendication 4, dans lequel lesdites étapes comprennent en outre, pendant une transaction financière impliquant une carte de paiement d'un client :
la réception à partir du module logiciel POS d'un numéro d'identification personnel chiffré, PIN, du client ;
l'utilisation la clé de session sécurisée dans le lecteur de carte pour déchiffrer le PIN ; et
l'utilisation du PIN pour accéder à des données sur la carte de paiement.

6. Support lisible par machine comprenant des instructions qui, lorsqu'elles sont exécutées dans le système selon la revendication 4, amènent le système à exécuter le procédé de l'une quelconque des revendications 1 à 3.
